# EUROPÄISCHE PATENTSCHRIFT

(11) **EP 3 921 135 B1**
(45) Veröffentlichungstag und Bekanntmachung des Hinweises auf die Patenterteilung: **20.07.2022**
(21) Anmeldenummer: 20705909.8
(22) Anmeldetag: 13.02.2020
(51) Int. Cl.: B29C 48/90, B29C 48/09, B22F 3/105, B22F 5/10, B33Y 10/00, B33Y 30/00, B33Y 50/00, B33Y 80/00

(54) **LAMELLENBLOCK MIT LAMELLENDURCHBRÜCHEN**
LAMELLA BLOCK WITH LAMELLA OPENINGS
BLOC DE LAMELLES COMPORTANT DES PASSAGES DE LAMELLE

(30) Priorität: 21.03.2019 DE 102019002027
(43) Veröffentlichungstag der Anmeldung: 15.12.2021
(73) Patentinhaber: KraussMaffei Technologies GmbH, 80997 München (DE)
(72) Erfinder: ESSWEIN, Michael, 85375 Neufahrn (DE); BREUNING, Walter, 85232 Bergkirchen Bayern (DE)
(74) Vertreter: Krauss, Philipp
(86) Internationale Anmeldenummer: PCT/EP2020/053696
(87) Internationale Veröffentlichungsnummer: WO 2020/187495

(56) Entgegenhaltungen:
- DE-A1-102009 016 100
- DE-B3- 10 315 125
- DE-B3-102005 002 820
- US-A1- 2003 211 657

## Beschreibung

Die Erfindung betrifft einen Lamellenblock für eine Kalibriereinrichtung zur Kalibrierung eines extrudierten Profils. Die Erfindung betrifft ferner ein Verfahren zur Herstellung eines derartigen Lamellenblocks, ein System zur additiven Fertigung eines derartigen Lamellenblocks und ein entsprechendes Computerprogramm und Datensatz.

Kalibriereinrichtungen werden zur Kalibrierung von extrudierten Endlosprofilen, wie beispielsweise Rohrprofilen, eingesetzt. Bei der Herstellung derartiger Profile wird zunächst in einem Extruder eine zur Herstellung des Profils gewünschte Kunststoffschmelze erzeugt. Die erzeugte Kunststoffschmelze wird dann durch eine Austrittsdüse des Extruders gepresst, welche die Form des Profils vorgibt. Das aus der Austrittsdüse des Extruders austretende Profil durchläuft anschließend eine Kalibriereinrichtung, welche das noch erhitzte Profil dimensionsgenau nachformt.

Eine derartige Kalibriereinrichtung zur Dimensionierung extrudierter Profile ist aus der DE 198 43 340 C2 bekannt. Dort wird eine variabel einstellbare Kalibriereinrichtung gelehrt, die zur Kalibrierung von extrudierten Kunststoffrohren mit unterschiedlichem Rohrdurchmesser ausgebildet ist. Die Kalibriereinrichtung umfasst ein Gehäuse und eine Vielzahl von im Gehäuse kreisförmig angeordneten Lamellenblöcken, deren Lamellen ineinandergreifen können. Die ineinandergreifenden Lamellenblöcke bilden einen Kalibrierkorb mit kreisförmiger Kalibrieröffnung, durch welche die zu kalibrierenden Rohre geführt werden (vgl. insbesondere die Figuren 1 und 2 der DE 198 43 340 C2). Ferner ist jeder Lamellenblock mit einer Betätigungsvorrichtung gekoppelt, die zur individuellen radialen Verschiebung des jeweiligen Lamellenblocks vorgesehen ist. Auf diese Weise kann der Wirkquerschnitt der durch die Vielzahl der Lamellenblöcke gebildeten kreisförmigen Kalibrieröffnung je nach Bedarf entsprechend eingestellt werden.

DE 103 15 125 B3 betrifft eine Kalibriereinrichtung zur Kalibrierung von extrudierten Endlosprofilen, insbesondere Rohren, umfassend eine Vielzahl von aus einzelnen Segmenten bestehenden hintereinander angeordneten Segmentkränzen, deren Innenoberfläche gemeinsam eine Kalibrieröffnung bilden. DE 10 2005 002 820 B3 betrifft eine stufenlos einstellbare Kalibrierhülse für extrudierte Kunststoffrohre mit einem Einlaufkopf und zwei Bänderlagen, die sich nach Art eines Scherengitters kreuzen und an den Kreuzungspunkten gelenkig miteinander verbunden sind.

US 2003 / 211 657 A1 offenbart einen stereolithographisch gefertigten Kühlkörper. Wenn stereolithographische Verfahren verwendet werden, um das Wärmeableitungselement des Kühlkörpers herzustellen, kann das Wärmeableitungselement nichtlineare oder gewundene Durchgänge aufweisen, durch die Luft strömen kann. Da mindestens ein Teil des Kühlkörpers stereolithographisch hergestellt ist, kann dieser Teil eine Reihe übereinanderliegender, zusammenhängender, aneinander haftender Schichten aus wärmeleitendem Material aufweisen. Die Schichten können durch konsolidierte ausgewählte Bereiche einer Schicht aus nicht konsolidiertem teilchenförmigem oder pulverförmigem Material oder durch Definieren einer Objektschicht aus einer Materialschicht hergestellt werden.

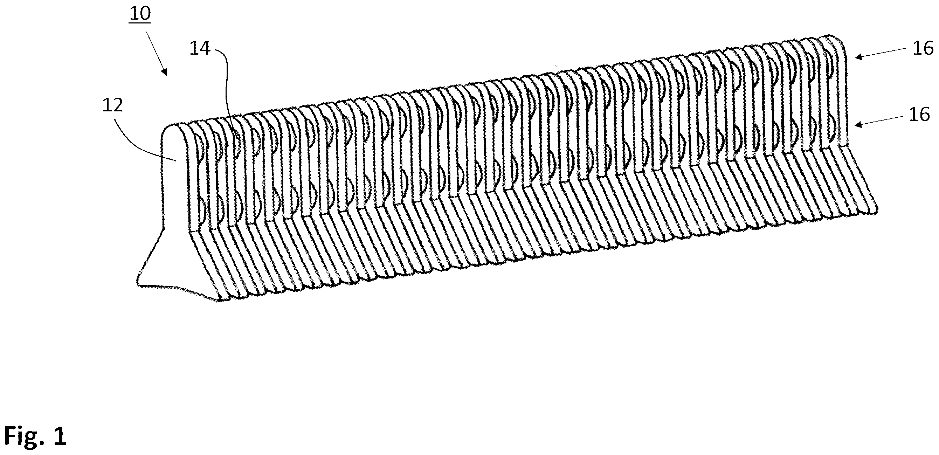

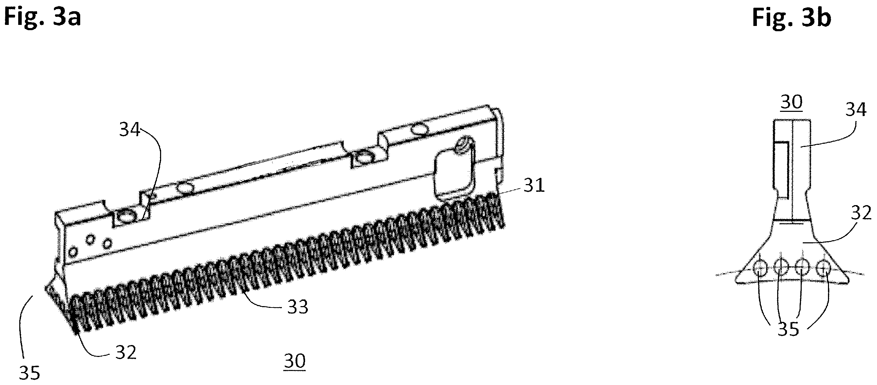

Die in der DE 198 43 340 C2 beschriebenen Lamellenblöcke bestehen jeweils aus einer Vielzahl von Lamellen, die auf zwei voneinander beabstandet angeordneten Trägerstangen aufgefädelt sind. Zur Einhaltung eines gewünschten Abstands zwischen benachbarten Lamellen kommen Abstandshülsen zum Einsatz (vgl. auch Figur 3 der DE 198 43 340 C2). Die Abstände zwischen benachbarten Lamellen werden auch als Nuten bezeichnet. Ein Beispiel eines gefädelten Lamellenblocks ist ferner in Figur 1 gezeigt. Der in Figur 1 dargestellte Lamellenblock 10 umfasst eine Vielzahl von Lamellen 12 und Abstandshülsen 14, die abwechselnd entlang zweier Trägerstangen 16 aufgefädelt sind. Derartige gefädelte Lamellenblöcke sind aufwendig in der Fertigung und damit kostenintensiv.

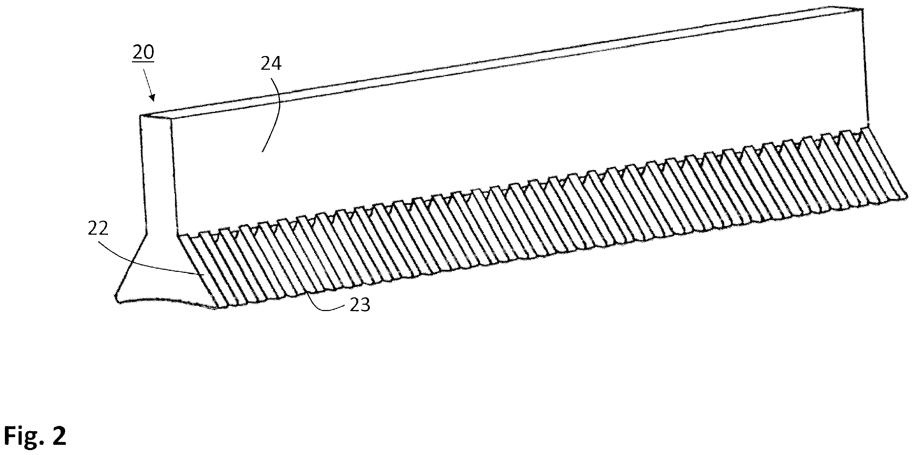

Abweichend von den oben beschriebenen gefädelten Lamellenblöcken sind ferner Lamellenblöcke mit geschlossenen Trägerstrukturen (bzw. Rückenstrukturen) bekannt. Figur 2 zeigt ein Beispiel eines derartigen Lamellenblocks. Der Lamellenblock 20 umfasst eine Vielzahl von Lamellen 22, die von einer blockförmig ausgebildeten Trägerstruktur 24 getragen werden. Die Lamellen 22 sind entlang der Trägerstruktur durch Nuten 23 voneinander getrennt angeordnet. Die blockförmige Trägerstruktur 24 ist hierbei in der Form eines massiven Körpers (z.B. stabförmiger Körper) realisiert. Ferner ist die Trägerstruktur 24 mit den Lamellen 22 einstückig ausgebildet. Weitere Beispiele von Lamellenblöcken mit geschlossener Trägerstruktur sind aus der WO 2004/103684 A1 bekannt. Ein Vorteil von Lamellenblöcken mit geschlossener Trägerstruktur 24 besteht darin, dass diese relativ einfach und kostengünstig hergestellt werden können. Beispielsweise kann der in Fig. 2 dargestellte einstückig ausgebildete Lamellenblock 20 durch geeignete Bearbeitungsverfahren (wie beispielsweise Fräsen, Zuschneiden) aus einem Materialblock hergestellt werden. Denkbar ist aber auch der Einsatz eines Gussverfahrens, um den Lamellenblock 20 herzustellen.

Die Lamellen der in den Figuren 1 und 2 dargestellten Lamellenblöcke weisen aufgrund ihrer massiven Ausgestaltung mäßige Kühleigenschaften auf. Eine effektive Kühlung des zu kalibrierenden Profils ist mit dem oben beschriebenen Lamellendesign kaum realisierbar, was sich wiederum auf die Qualität der Profiloberfläche niederschlägt. Zur Verbesserung der Kühleigenschaften wurde daher vorgeschlagen, die Lamellen der Lamellenblöcke mit einer oder mehreren kreisrunden Bohrungen zu versehen. Durch die kreisrunden Bohrungen kann Kühlwasser fließen (z.B. wenn die Lamellen im Kühlwassersumpf des Kalibrierkorbs eintauchen), so dass die Lamellen zusätzlich von Innen gekühlt werden können. Ein derartiges Lamellenblockdesign ist in den Figuren 3a und 3b gezeigt.

Figur 3a zeigt eine 3D-Ansicht eines Lamellenblocks 30, der eine Trägerstruktur 34 sowie eine an der Trägerstruktur 34 angeordnete Lamellenstruktur 31 aufweist. Die Lamellenstruktur 31 umfasst eine Vielzahl von durch Nuten 33 voneinander beabstandet angeordneten Lamellen 32, welche jeweils vier kreisrunde Bohrungen 35 aufweisen. Die Lamellenbohrungen 35 sind in der in Figur 3b dargestellten Stirnseitenansicht des Lamellenblocks 30 besser verdeutlicht. Die Bohrungen 35 sind über jede Lamelle 32 gleichmäßig verteilt angeordnet und weisen denselben kreisrunden Bohrquerschnitt auf. Ferner sind die Bohrungen 35 in den aufeinander folgenden Lamellen 32 an denselben Lamellenpositionen angeordnet. Somit weisen alle Lamellen 32 dieselbe Bohrlochgeometrie auf.

Durch die Anordnung von Lamellenbohrungen kann die Kühlfunktion der Lamellen verbessert werden. Jedoch hat sich gezeigt, dass die Kühlanforderung an die Lamellen innerhalb eines Lamellenblocks stark variieren kann. Somit stößt auch der in Zusammenhang mit den Figuren 3a und 3b beschriebene Ansatz, die Lamellen mit uniformen Bohrlöchern zu versehen, an seine Grenzen, da die vorgesehenen Bohrlöcher für bestimmte Lamellen zwar ausreichend sein können, für andere Lamellen mit hohem Kühlbedarf jedoch nicht. Es hat sich ferner gezeigt, dass das im Stand der Technik zur Erzeugung von Bohrlöchern in aufeinanderfolgenden Lamellen eingesetzte Tieflochbohrverfahren aufwendig und kostenintensiv ist. In gefädelten Lamellenblöcken kann anstelle des Tieflochbohrens Laserschneiden eingesetzt werden. Allerdings ist die Gesamtkonstruktion des gefädelten Lamellenblocks hinsichtlich Fertigung und Montage deutlich aufwendiger und kostenintensiver, wie in Zusammenhang mit Figur 1 oben beschrieben.

Es ist daher Aufgabe der vorliegenden Erfindung, Lamellenblöcke für eine Kalibriereinrichtung bereitzustellen, welche die im Zusammenhang mit dem Stand der Technik aufgezeigten Probleme beseitigen. Ferner ist es Aufgabe der vorliegenden Erfindung, Lamellenblöcke bereitzustellen, welche kostengünstig in der Herstellung sind und ein optimiertes Kühlverhalten aufweisen.

Zur Lösung der oben genannten Aufgabe sowie weiterer Aufgaben wird ein Lamellenblock für eine Kalibriereinrichtung zur Kalibrierung eines extrudierten Kunststoffprofils bereitgestellt. Der Lamellenblock umfasst eine Lamellenstruktur, welche eine Vielzahl von Lamellen aufweist, die durch Nuten voneinander beabstandet und in Längsrichtung des Lamellenblocks angeordnet sind, wobei wenigstens einige der Lamellen mit wenigstens einem Lamellendurchbruch mit vorgegebener variabler Geometrie versehen sind. Die Geometrie der Lamellendurchbrüche (insbesondere die Querschnittsform und/oder Querschnittsausdehnung der Durchbrüche) ist an den an der jeweiligen Lamelle der Lamellenstruktur zu erwartenden Kühlbedarf angepasst.

Der wenigstens eine in einer Lamelle angeordnete Lamellendurchbruch kann die Lamelle (im Wesentlichen) in Längsrichtung des Lamellenblocks oder auch quer zur Längsrichtung des Lamellenblocks durchbrechen (sogenannter radialer Lamellendurchbruch). Denkbar ist auch ein bezüglich der Längsrichtung schräg verlaufender Durchbruch (beispielsweise diagonaler Durchbruchsverlauf).

Mit Geometrie des Lamellendurchbruchs kann im Wesentlichen die Querschnittsgeometrie (Querschnittsform und/oder Querschnittsausdehnung) des Durchbruchs gemeint sein. Mit Querschnittsform (Querschnittsausdehnung) kann die Form (Ausdehnung) des Durchbruchs in einer Ebene senkrecht zur Verlaufsrichtung des Durchbruchs gemeint sein. Ist der Durchbruch (im Wesentlichen) parallel zur Längsrichtung des Lamellenblocks verlaufend ausgebildet, so kann mit Querschnittsform (Querschnittsausdehnung) die Form des Durchbruchs in einer Ebene senkrecht zur Längsrichtung des Lamellenblocks gemeint sein. Neben der Querschnittsform kann die Geometrie des Durchbruchs auch von dem Verlauf des Durchbruchs abhängen.

Die Anzahl der Lamellendurchbrüche kann für jede Lamelle individuell angepasst sein. Alternativ oder zusätzlich zur Anzahl der Lamellendurchbrüche kann auch die Geometrie der Lamellendurchbrüche für jede Lamelle individuell angepasst sein. Insbesondere kann die Anzahl der Lamellendurchbrüche an den an der jeweiligen Lamelle der Lamellenstruktur zu erwartenden Kühlbedarf angepasst sein. Ist beispielsweise der zu erwartende Kühlbedarf einer Lamelle gering, so kann für die entsprechende Lamelle lediglich ein oder gar kein Lamellendurchbruch vorgesehen sein. Weist die Lamelle einen Lamellendurchbruch auf, so kann der Durchbruch eine Querschnittsfläche aufweisen, die im Vergleich zur Querschnittsfläche der Lamelle klein ausgebildet ist. Der Lamellendurchbruch nimmt somit nur einen kleinen Teil der Lamellenquerschnittsfläche ein. Hingegen können Lamellen mit vergleichsweise hohem Kühlbedarf mehrere Lamellendurchbrüche aufweisen. Die mehreren Lamellendurchbrüche können zusammen eine Gesamtquerschnittsfläche bilden, die einen größeren Teil der Lamellenquerschnittsfläche einnehmen. Die Gesamtquerschnittsfläche der Durchbrüche kann hierbei mehr als 50% der Lamellenquerschnittsfläche einnehmen.

Die Geometrie (Querschnittsform und/oder Querschnittsausdehnung) von Lamellendurchbrüchen aufeinanderfolgender Lamellen kann variieren. Beispielsweise können Lamellen entlang des Lamellenblocks mit Lamellendurchbrüchen versehen sein, die voneinander verschiedene Querschnittsformen und/oder Querschnittsausdehnungen aufweisen. Die Wahl der Durchbruchgeometrie einer jeden Lamelle kann entsprechend dem zu erwarteten Kühlbedarf einer jeden Lamelle angepasst sein. Alternativ hierzu ist auch denkbar, dass die Lamellendurchbrüche aufeinanderfolgender Lamellen dieselbe Geometrie aufweisen. In einem derartigen Fall sind die Durchbrüche aufeinander folgender Lamellen identisch ausgebildet.

Sind mehrere (also wenigstens zwei) Lamellendurchbrüche in einer Lamelle angeordnet, so können die Lamellendurchbrüche innerhalb der Lamelle dieselbe Geometrie oder voneinander verschiedene Geometrien aufweisen. Insbesondere können die Querschnittsformen und/oder Querschnittsausdehnungen der mehreren Lamellendurchbrüche innerhalb der Lamelle voneinander verschieden ausgebildet sein.

Ferner können die Lamellendurchbrüche aufeinanderfolgender Lamellen versetzt zueinander angeordnet sein. Die Lamellendurchbrüche aufeinanderfolgender Lamellen können quer zur Längsrichtung des Lamellenblocks versetzt zueinander angeordnet sein. Die Durchbrüche aufeinanderfolgender Lamellen können somit an unterschiedlichen Lamellenpositionen angeordnet sein. Die Durchbrüche aufeinanderfolgender Lamellen müssen sich nicht an denselben Lamellenpositionen wiederholen. Vielmehr kann die Anordnung der Lamellendurchbrüche von Lamelle zu Lamelle variieren.

Die Querschnittsgeometrie eines jeden Lamellendurchbruchs kann an die Lamellengeometrie angepasst sein. Insbesondere kann die Querschnittsform eines jeden Lamellendurchbruchs an die Querschnittsform der entsprechenden Lamelle angepasst sein. Die Querschnittsform eines jeden Lamellendurchbruchs kann hierbei die Form eines Dreiecks, Rechtecks, Polygons, Kreises, Halbkreises, einer Ellipse oder eine anderweitige Form aufweisen. Die Form und Anordnung eines jeden Lamellendurchbruchs innerhalb einer Lamelle kann so gewählt sein, dass jeder Lamellendurchbruch zu einer verbesserten Kühlfunktion beiträgt, ohne hierbei die Lamellenstruktur nennenswert mechanisch zu schwächen.

Der Lamellenblock kann ferner eine Trägerstruktur aufweisen, in der die Lamellen der Lamellenstruktur befestigt sind. Die Trägerstruktur kann in Form einer oder mehrerer Trägerstangen oder einer massiven Trägerstruktur ausgebildet sein, so wie in Zusammenhang mit den Figuren 1 und 2 eingangs beschrieben.

Die Trägerstruktur kann mit den Lamellen bzw. der Lamellenstruktur einstückig ausgebildet sein. Alternativ können die Lamellenstruktur bzw. die Lamellen sowie die Trägerstruktur jeweils separat gefertigt sein. Die Lamellenstruktur bzw. Lamellen kann (können) dann mit der Trägerstruktur entsprechend verbunden sein.

Die Trägerstruktur und die Lamellen können aus demselben Material oder aus verschiedenen Materialien gefertigt sein. Gemäß einer Variante kann das Material, aus dem die Trägerstruktur und/oder die Lamellen gefertigt sind, aus einem metallischen Werkstoff gefertigt sein. Denkbar ist jedoch auch die Verwendung eines polymeren Werkstoffs (mit Additiven).

Der oben beschriebene Lamellenblock mit individuell angepassten Lamellendurchbrüchen wird bevorzugt mittels 3D-Druck hergestellt. Die Anwendung einer 3D-Druck-Technik ermöglicht eine kostengünstige und schnelle Herstellung von Lamellenblöcken, wobei jede beliebige Durchbruchgeometrie realisierbar ist.

Gemäß einem weiteren Aspekt der Erfindung wird eine Kalibriereinrichtung zur Kalibrierung von extrudierten Kunststoffprofilen bereitgestellt, wobei die Kalibriereinrichtung eine Vielzahl der erfindungsgemäßen Lamellenblöcke aufweist, die zur Bildung einer Kalibrieröffnung zueinander angeordnet sind. Die Anordnung der Lamellenblöcke kann dabei derart sein, dass diese eine kreisrunde Kalibrieröffnung bilden.

Die Kalibriereinrichtung kann ferner eine Vielzahl von Betätigungseinrichtungen umfassen, wobei jede Betätigungseinrichtung jeweils mit einem Lamellenblock gekoppelt ist, um einen jeden Lamellenblock individuell zu betätigen. Durch die Betätigungseinrichtung kann jeder Lamellenblock radial zur Kalibrieröffnung individuell betätigt werden. Dadurch kann der Wirkquerschnitt der Kalibrieröffnung nach Bedarf an den Querschnitt (Durchmesser) des zu kalibrierenden Profils angepasst werden.

Ferner kann die Kalibriereinrichtung ein Gehäuse aufweisen, das zur Aufnahme und Lagerung der Betätigungseinrichtung und der mit der Betätigungseinrichtung gekoppelten Lamellenblöcke vorgesehen ist.

Gemäß einem weiteren Aspekt der vorliegenden Erfindung wird ein Verfahren zum Herstellen eines Lamellenblocks wie oben beschrieben bereitgestellt. Das Verfahren zum Herstellen des Lamellenblocks umfasst wenigstens den Schritt des Herstellens des Lamellenblocks mittels 3D-Druck oder mittels additiver Fertigungsverfahren. Die Herstellung des Lamellenblocks mittels 3D-Druckverfahren oder mittels additiver Fertigungsverfahren kann hierbei ein schichtweises Lasersintern oder Laserschmelzen von Materialschichten umfassen, wobei die Materialschichten entsprechend der zu erzeugenden Form des Lamellenblocks nacheinander (sequentiell) aufgetragen werden.

Das Verfahren kann ferner den Schritt des Berechnens einer 3D-Lamellenblockgeometrie (CAD-Daten) umfassen. Ferner kann das Verfahren den Schritt des Umwandelns der 3D-Geometriedaten in entsprechende Steuerbefehle für den 3D-Druck oder die additive Fertigung umfassen.

Insbesondere kann der Schritt des Berechnens einer 3D-Lamellenblockgeometrie den Schritt des Berechnens von Lamellendurchbrüchen umfassen, wobei die Geometrie und Anordnung der Lamellendurchbrüche für jede Lamelle der Lamellenstruktur individuell berechnet werden. Auf diese Weise kann ein Lamellenblock mit für jede Lamelle individuell angepassten Lamellendurchbrüchen erzeugt werden.

Gemäß einem weiteren Aspekt wird ein Verfahren zum Herstellen eines Lamellenblocks bereitgestellt, das die Schritte umfasst: Erstellen eines Datensatzes, welcher den wie oben beschrieben Lamellenblock abbildet; und Speichern des Datensatzes auf einer Speichervorrichtung oder einem Server. Das Verfahren kann ferner umfassen: Eingeben des Datensatzes in eine Verarbeitungsvorrichtung oder einen Computer, welche/r eine Vorrichtung zur additiven Fertigung derart ansteuert, dass diese den im Datensatz abgebildeten Lamellenblock fertigt.

Gemäß einem weiteren Aspekt wird ein System zur additiven Fertigung eines Lamellenblocks bereitgestellt, mit einer Datensatzerzeugungsvorrichtung zum Erzeugen eines Datensatzes, welcher den wie oben beschrieben Lamellenblock abbildet, einer Speichervorrichtung zum Speichern des Datensatzes und einer Verarbeitungsvorrichtung zum Empfangen des Datensatzes und zum derartigen Ansteuern einer Vorrichtung zur additiven Fertigung, dass diese den im Datensatz abgebildeten Lamellenblock fertigt. Die Speichervorrichtung kann ein USB-Stick, eine CD-ROM, eine DVD, eine Speicherkarte oder eine Festplatte sein. Die Verarbeitungsvorrichtung kann ein Computer, ein Server oder ein Prozessor sein.

Gemäß einem weiteren Aspekt wird ein Computerprogramm bzw. Computerprogrammprodukt bereitgestellt, umfassend Datensätze, die bei dem Einlesen der Datensätze durch eine Verarbeitungsvorrichtung oder einen Computer diese/n veranlasst, eine Vorrichtung zur additiven Fertigung derart anzusteuern, dass die Vorrichtung zur additiven Fertigung den wie oben beschrieben Lamellenblock fertigt.

Gemäß einem weiteren Aspekt wird ein computerlesbarer Datenträger bereitgestellt, auf dem das vorstehend beschriebene Computerprogramm gespeichert ist. Der computerlesbare Datenträger kann ein USB-Stick, eine CD-ROM, eine DVD, eine Speicherkarte oder eine Festplatte sein.

Gemäß einem weiteren Aspekt wird ein Datensatz bereitgestellt, welcher den wie oben beschrieben Lamellenblock abbildet. Der Datensatz kann auf einem computerlesebaren Datenträger gespeichert sein.

Weitere Vorteile, Einzelheiten und Aspekte der vorliegenden Erfindung werden anhand der nachfolgenden Zeichnungen weiter diskutiert. Es zeigen:
- Fig. 1: einen Lamellenblock für eine Kalibriereinrichtung gemäß dem Stand der Technik;
- Fig. 2: einen weiteren Lamellenblock für eine Kalibriereinrichtung gemäß dem Stand der Technik;
- Fign. 3a/3b: Ansichten eines weiteren Lamellenblocks gemäß dem Stand der Technik;

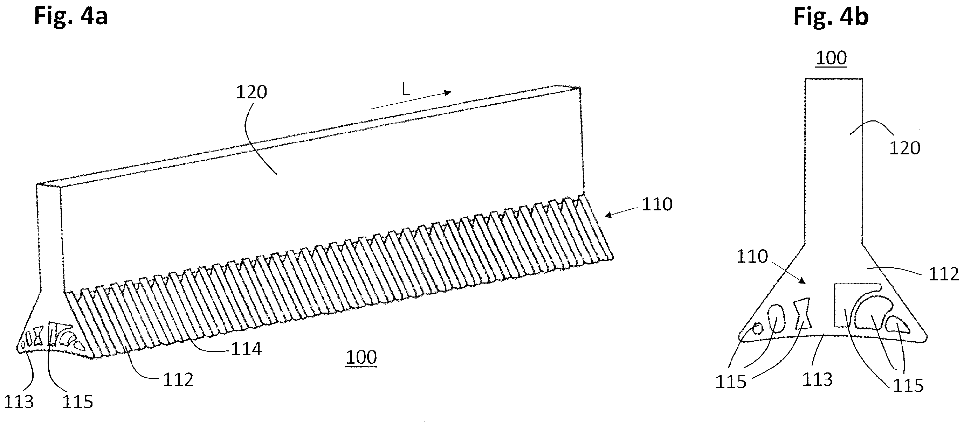

- Fign. 4a/4b: Ansichten eines erfindungsgemäßen Lamellenblocks;

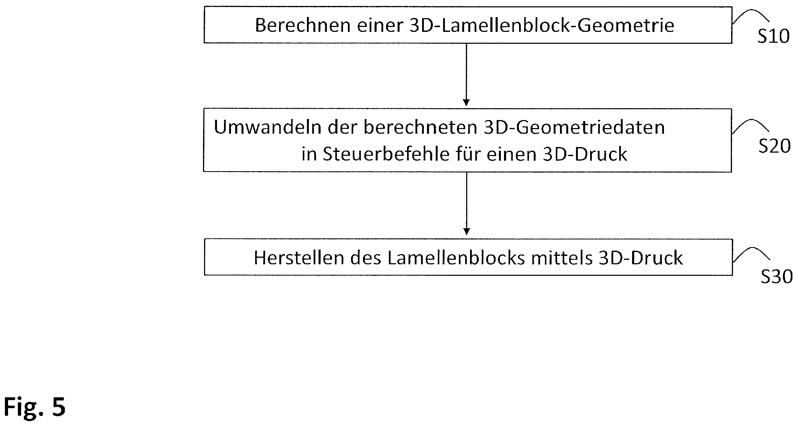

- Fig. 5: ein Blockdiagramm eines Verfahrens zur Herstellung des erfindungsgemäßen Lamellenblocks gemäß den Figuren 4a und 4b; und

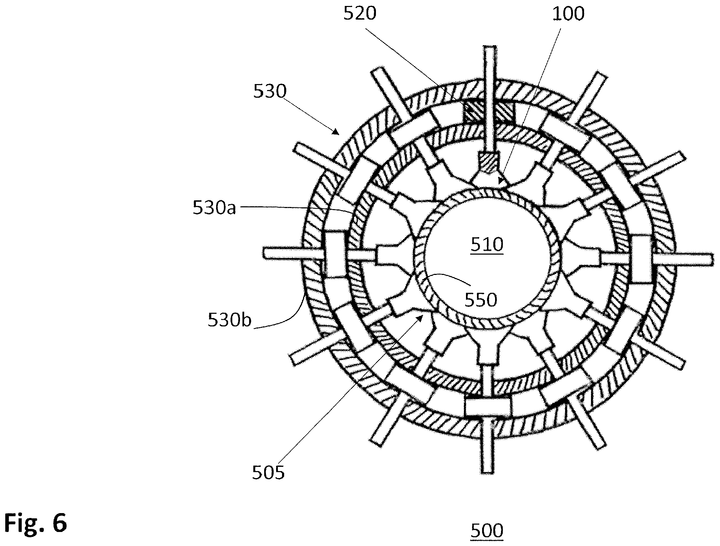

- Fig. 6: eine Kalibriereinrichtung gemäß der vorliegenden Erfindung.

Die Figuren 1, 2, 3a und 3b wurden bereits im Zusammenhang mit dem Stand der Technik eingangs diskutiert. Es sei auf die dortige Beschreibung verwiesen.

Im Zusammenhang mit den Figuren 4a und 4b wird nun ein Beispiel eines erfindungsgemäßen Lamellenblocks 100 für eine Kalibriereinrichtung weiter beschrieben. Figur 4a zeigt eine dreidimensionale Ansicht des Lamellenblocks 100. Figur 4b zeigt eine dazu korrespondierende Frontansicht des Lamellenblocks 100.

Der Lamellenblock 100 umfasst eine Trägerstruktur 120 sowie eine Lamellenstruktur 110, die eine Vielzahl von Lamellen 112 aufweist. Die Trägerstruktur 120 fungiert als Träger für die Lamellenstruktur 110.

Der Lamellenblock 100 kann ferner eine Kopplungseinrichtung aufweisen (in den Figuren 4a und 4b nicht dargestellt). Die Kopplungseinrichtung ist zur Kopplung mit einer Betätigungseinrichtung einer Kalibriereinrichtung vorgesehen. Die Betätigungseinrichtung ist in den Figuren 4a und 4b ebenso nicht zu sehen. Gemäß einer Implementierung kann die Kopplungseinrichtung zwei oder mehrere voneinander beabstandet angeordnete Gewindebohrungen aufweisen. Die Gewindebohrungen können in der Trägerstruktur 120 integriert ausgebildet sein.

Die Trägerstruktur 120 ist als massiver Körper ausgebildet. Die Trägerstruktur 120 weist im Querschnitt senkrecht zur Längsrichtung ein rechteckförmiges Profil auf. Anderweitige, von einem rechteckförmigen Querschnittsprofil abweichende Profile sind ebenso denkbar. Anstelle des in der Figur 4a gezeigten massiven Trägerkörpers kann der Lamellenblock 100 auch mehrere Trägerstangen aufweisen, an denen die Lamellen 112 befestigt sind.

Im Folgenden wird nun die Lamellenstruktur 110 des erfindungsgemäßen Lamellenblocks 100 weiter beschrieben. Die Lamellenstruktur 110 umfasst eine Vielzahl von Lamellen 112, die in Längsrichtung L des Lamellenblocks 100 voneinander beanstandet angeordnet sind (siehe Figur 4a). Benachbarte Lamellen 112 sind durch entsprechende Nuten 114 voneinander getrennt. Jede Lamelle 112 weist ein im Querschnitt zur Längsrichtung L dreiecksförmiges Profil auf. Ferner weist jede Lamelle 112 eine der Trägerstruktur 120 abgewandte Lamellenfläche 113 auf, die leicht gekrümmt ausgebildet ist. Die Lamellenfläche 113 ist dem zu kalibrierenden Profil zugewandt. Sie bildet die Kontaktfläche mit dem zu kalibrierenden Profil. Je nach Anwendung kann der Lamellenblock 100 auch eine anderweitige Lamellenform aufweisen, die von dem hier beschriebenen dreieckförmigen Querschnittsprofil abweichen kann. Ebenso kann die dem zu kalibrierenden Profil zugewandte Lamellenfläche 113 flach sein oder eine anderweitige Krümmung aufweisen.

Wie ferner in den Figuren 4a und 4b angedeutet ist, weisen zumindest einige der entlang des Lamellenblocks 100 angeordneten Lamellen 110 Durchbrüche 115 auf. Die in den Figuren 4a und 4b dargestellte Lamelle 112 an der Stirnseite des Lamellenblocks 100 weist exemplarisch sechs Lamellendurchbrüche 115 auf, welche jeweils die Lamelle 112 in Längsrichtung L des Lamellenblocks 100 (im Wesentlichen geradlinig) durchbrechen. Der wesentliche Unterschied zwischen den einzelnen Lamellendurchbrüchen 115 besteht in ihrer geometrischen Ausgestaltung. Wie aus der Stirnseitenansicht der Figur 4b leicht zu entnehmen ist, unterscheiden sich die sechs Durchbrüche 115 in ihrer Querschnittsform und Querschnittsausdehnung voneinander. Die Querschnittsform und Querschnittsausdehnung der Durchbrüche 115 variiert hierbei in Abhängigkeit ihrer Anordnung innerhalb der Lamelle 112. So z.B. weisen die in der Lamellenmitte angeordneten Durchbrüche eine wesentlich größere Querschnittsausdehnung auf, als jene Durchbrüche 115, die in den spitz zulaufenden Außenbereichen der Lamelle 112 angeordnet sind. Ähnliches gilt im Übrigen auch für die Querschnittsform der einzelnen Lamellendurchbrüche 115, welche an die dreieckförmige Querschnittsform der Lamelle 112 entsprechend angepasst sind. Durch die hier beschriebene individuelle Anpassung der (Querschnitts-)Geometrie der Durchbrüche 115 an die Lamellengeometrie kann die durch die Lamellendurchbrüche 115 erzeugte Gesamtdurchbruchsfläche optimiert (maximiert) werden, ohne die mechanische Stabilität der Lamelle 112 wesentlich zu schwächen. Durch Optimierung (Maximierung) der Durchbruchsfläche kann die Kühlfunktion der Lamelle 112 deutlich verbessert (optimiert) werden.

Die in den Figuren 4a und 4b gezeigten Durchbrüche 115 sind rein beispielhaft. Es versteht sich, dass die Anzahl der Durchbrüche 115 pro Lamelle 112 nicht auf sechs Durchbrüche 115 beschränkt ist, sondern je nach Kühlbedarf einer Lamelle 112 variieren kann. Ebenso ist die Querschnittgeometrie (insbesondere die Querschnittsform) der Durchbrüche 115 nicht auf jene in den Figuren 4a und 4b beschränkt. Die Durchbrüche 115 können elliptische, halbkreisförmige, kreisförmige, dreieckförmige, rechteckige und/oder anderweitige polygone Querschnittsformen aufweisen. Entscheidend ist, dass die Anzahl und/oder die Querschnittsgeometrie der Durchbrüche an den Kühlbedarf der betreffenden Lamelle entsprechend angepasst ist (sind).

Wie ferner aus den Figuren 4a und 4b ersichtlich ist, ist die Trägerstruktur 120 zusammen mit der Lamellenstruktur 110 einstückig ausgebildet. Zur Herstellung des in den Figuren 4a und 4b gezeigten Lamellenblocks 100 mit variablen Lamellendurchbrüchen 115 kann bevorzugt ein generatives bzw. additives Herstellungsverfahren zum Einsatz kommen. Ein derartiges Herstellungsverfahren ist in der Figur 5 gezeigt und wird im Folgenden weiter beschrieben.

Demnach kommt ein 3D-Druckverfahren zum Einsatz. Hierbei wird in einem ersten Schritt S10 eine 3D-Lamellenblockgeometrie (CAD-Daten) berechnet. Die 3D-Lamellenblockgeometrie (bzw. die die 3D-Lamellenblockgeometrie beschreibenden CAD-Daten) umfassen insbesondere die für jede Lamelle vorgesehenen, individuell angepassten Lamellendurchbrüche. Die Anzahl, Geometrie und Anordnung der Lamellendurchbrüche können hierbei für jede Lamelle unter Berücksichtigung vorgegebener Modellparametern (wie beispielsweise die Geometrie der Lamelle, Material der Lamelle, thermische und mechanische Eigenschaften der Lamelle) individuell berechnet werden.

In einem darauffolgenden zweiten Schritt S20 werden die berechneten 3D-Geometriedaten in Steuerbefehle zum Betreiben einer 3D-Druckeinrichtung umgewandelt. Die 3D-Druckeinrichtung kann zum Durchführen eines 3D-Druckverfahrens (z.B. ein Lasersinterverfahren oder Laserschmelzverfahren) ausgelegt sein.

Basierend auf den erzeugten Steuerbefehlen wird dann der Lamellenblock 100 mit Hilfe der 3D-Druckeinrichtung schichtweise aufgebaut (Schritt S30). Als Werkstoff für den 3D-Druck kann ein metallischer Werkstoff oder ein Polymerwerkstoff zum Einsatz kommen.

Das hier beschriebene 3D-Druckverfahren zur Herstellung der erfindungsgemäßen Lamellenblöcke ist vorteilhaft, da je nach Bedarf beliebige Durchbruchformen in den Lamellen realisiert werden können. Die Durchbruchformen müssen nicht auf uniforme kreisrunde Bohrungen beschränkt bleiben, sondern können in Abhängigkeit des Kühlbedarfs (und der Lamellengeometrie) variabel ausgestaltet sein. Die Anordnung und Geometrie der Durchbrüche können für jede Lamelle dahingehend optimiert sein, dass die Lamelle eine optimale Kühlung erfährt, wenn sie beispielsweise im Kühlwassersumpf des Kalibrierkorbs eintaucht.

In Zusammenhang mit der Figur 6 wird eine Kalibriereinrichtung 500 zur Kalibrierung eines extrudierten Kunststoffprofils 550 beschrieben. Figur 6 zeigt eine Schnittansicht der Kalibriereinrichtung 500. Das zu kalibrierende Profil 550 ist in der in Figur 6 gezeigten Implementierung ein Rohrprofil.

Die Kalibriereinrichtung 500 umfasst eine Vielzahl der oben beschriebenen erfindungsgemäßen Lamellenblöcke 100, die in Umfangsrichtung der Kalibriereinrichtung 500 derart zueinander angeordnet sind, dass sie einen Kalibrierkorb 505 mit einer gewünschten Kalibrieröffnung 510 bilden. Wie ferner in der Figur 5 schematisch angedeutet, können die benachbarten Lamellenblöcke 100 ineinandergreifend angeordnet sein. Die Lamellen 112 und Nuten 114 benachbarter Lamellenblöcke 100 sind hierfür in ihrer Anordnung und Abmessung (insbesondere in der Nutenbreite und Lamellenbreite) derart aufeinander abgestimmt, dass die Lamellen 112 benachbart angeordneter Lamellenblöcke 100 kammartig ineinander greifen können.

Ferner umfasst die Kalibriereinrichtung 500 eine Vielzahl von Betätigungseinrichtungen 520 (beispielsweise Linearaktoren), wobei jeweils eine Betätigungseinrichtung 520 mit einem Lamellenblock 100 gekoppelt ist. Die Betätigungseinrichtungen 520 sind dazu vorgesehen, die jeweiligen Lamellenblöcke 100 in radialer Richtung (also senkrecht zur Vorschubrichtung des zu kalibrierenden Profils) zu verschieben. Dadurch kann der Wirkquerschnitt der Kalibrieröffnung 510 an das zu kalibrierende Profil 550 entsprechend angepasst werden.

Ferner umfasst die Kalibriereinrichtung 500 ein Gehäuse 530 zur Aufnahme der Betätigungseinrichtungen 520 und der Lamellenblöcke 100. Das Gehäuse 530 kann zylinderförmig ausgebildet sein. Es kann einen inneren Gehäusezylinder 530a und einen äußeren Gehäusezylinder 530b aufweisen, wobei Komponenten der Betätigungseinrichtung 520 in dem Zwischenraum zwischen dem inneren Gehäusezylinder 530a und dem äußeren Gehäusezylinder 530b angeordnet sein können, ähnlich zu der in der DE 198 43 340 C2 beschriebenen Kalibriereinrichtung.

## Patentansprüche

1. Lamellenblock (100) für eine Kalibriereinrichtung (500) zur Kalibrierung eines extrudierten Profils (550), wobei der Lamellenblock (100) eine Lamellenstruktur (110) umfasst, welche eine Vielzahl von Lamellen (112) aufweist, die durch Nuten (114) voneinander beabstandet und in Längsrichtung des Lamellenblocks (100) angeordnet sind, **dadurch gekennzeichnet, dass** wenigstens einige der Lamellen (112) mit wenigstens einem Lamellendurchbruch (115) mit vorgegebener variabler Geometrie versehen sind, wobei die Geometrie von Lamellendurchbrüchen (115) innerhalb einer Lamelle (112) verschieden ist.

2. Lamellenblock (110) nach Anspruch 1, **dadurch gekennzeichnet, dass** die Geometrie der Lamellendurchbrüche (115) aufeinanderfolgender Lamellen (112) variiert.

3. Lamellenblock (100) nach einem der vorhergehenden Ansprüche, **dadurch gekennzeichnet, dass** die Lamellendurchbrüche (115) aufeinanderfolgender Lamellen (112) versetzt zueinander angeordnet sind.

4. Lamellenblock (110) nach einem der vorhergehenden Ansprüche, **dadurch gekennzeichnet, dass** der Lamellenblock (100) ferner eine Trägerstruktur (120) aufweist, an der die Lamellen (112) der Lamellenstruktur (110) befestigt sind.

5. Lamellenblock (100) nach einem der vorhergehenden Ansprüche, **dadurch gekennzeichnet, dass** der Lamellenblock (100) einstückig ausgebildet ist.

6. Lamellenblock nach einem der vorhergehenden Ansprüche, **dadurch gekennzeichnet, dass** der Lamellenblock (100) mittels 3D-Druck bzw. mittels eines additiven Fertigungsverfahrens hergestellt ist.

7. Kalibriereinrichtung (500) zur Kalibrierung von extrudierten Profilen (510), umfassend eine Vielzahl von Lamellenblöcken (100) gemäß einem der Ansprüche 1 bis 6, wobei die Lamellenblöcke (100) zur Bildung einer Kalibrieröffnung (510) zueinander angeordnet sind.

8. Kalibriereinrichtung nach Anspruch 7, wobei die Kalibriereinrichtung (500) eine Vielzahl von Betätigungseinrichtungen (520) umfasst, wobei jede Betätigungseinrichtung (520) jeweils mit einem Lamellenblock (100) gekoppelt ist, um einen jeden Lamellenblock (100) individuell zu betätigen.

9. Verfahren zum Herstellen eines Lamellenblocks (100) gemäß einem der Ansprüche 1 bis 6, umfassend den Schritt des Herstellens des Lamellenblocks (100) mittels 3D-Druck bzw. mittels additiver Fertigung.

10. Verfahren nach Anspruch 9, ferner umfassend Berechnen einer 3D-Lamellenblock-Geometrie, und Umwandeln der berechneten 3D-Lamellenblock-Geometriedaten in entsprechende Steuerbefehle für den 3D-Druck bzw. die additive Fertigung.

11. Verfahren nach Anspruch 10, wobei der Schritt des Berechnens der 3D-Lamellenblock-Geometrie umfasst: Berechnen von Lamellendurchbrüchen (115), wobei die Anzahl der Lamellendurchbrüche (115) und/oder die Geometrie der Lamellendurchbrüche (115) für jede Lamelle (112) individuell berechnet wird.

12. Verfahren zum Herstellen eines Lamellenblocks (100), die Schritte umfassend:
- Erstellen eines Datensatzes, welcher den Lamellenblock (100) nach einem der Ansprüche 1 bis 6 abbildet;
- Speichern des Datensatzes auf einer Speichervorrichtung oder einem Server; und
- Eingeben des Datensatzes in eine Verarbeitungsvorrichtung oder einen Computer, welche/r eine Vorrichtung zur additiven Fertigung derart ansteuert, dass diese den im Datensatz abgebildeten Lamellenblock (100) fertigt.

13. Computerprogramm, umfassend Datensätze, die bei dem Einlesen der Datensätze durch eine Verarbeitungsvorrichtung oder einen Computer diese/n veranlasst, eine Vorrichtung zur additiven Fertigung derart anzusteuern, dass die Vorrichtung zur additiven Fertigung ein Lamellenblock (100) mit den Merkmalen nach einem der Ansprüche 1 bis 6 fertigt.

14. Computerlesbarer Datenträger, auf dem das Computerprogramm nach Anspruch 13 gespeichert ist.

## Claims

1. A lamella block (100) for a calibrating device (500) for calibrating an extruded profile (550), wherein the lamella block (100) comprises a lamella structure (110), which has a plurality of lamellae (112) that are spaced apart from each other by grooves (114) and arranged in the longitudinal direction of the lamella block (100), **characterized in that** at least several of the lamellae (112) are provided with at least one lamella opening (115) with a prescribed, variable geometry, wherein the geometry of lamella openings (115) varies within a lamella (112).

2. The lamella block (110) according to claim 1, **characterized in that** the geometry of the lamella openings (115) of sequential lamellae (112) varies.

3. The lamella block (100) according to one of the preceding claims, **characterized in that** the lamella openings (115) of sequential lamellae (112) are arranged offset relative to each other.

4. The lamella block (110) according to one of the preceding claims, **characterized in that** the lamella block (100) further has a carrier structure (120) on which the lamellae (112) of the lamella structure (110) are fastened.

5. The lamella block (100) according to one of the preceding claims, **characterized in that** the lamella block (100) is integrally designed.

6. The lamella block (100) according to one of the preceding claims, **characterized in that** the lamella block (100) is manufactured by means of 3D printing or by means of an additive manufacturing process.

7. A calibrating device (500) for calibrating extruded profiles (510), comprising a plurality of lamella blocks (100) according to one of claims 1 to 6, wherein the lamella blocks (100) are arranged relative to each other to form a calibrating opening (510).

8. The calibrating device according to claim 7, wherein the calibrating device (500) comprises a plurality of activating devices (520), wherein each activating device (520) is coupled with a respective lamella block (100), so as to individually activate each lamella block (100).

9. A method for manufacturing a lamella block (100) according to one of claims 1 to 6, involving the step of manufacturing the lamella block (100) by means of 3D printing or additive manufacturing.

10. The method according to claim 9, further involving the step of calculating a 3D lamella block geometry, and converting the calculated 3D geometry data into corresponding control commands for 3D printing or additive manufacturing.

11. The method according to claim 10, wherein the step of calculating the 3D lamella block geometry involves: Calculating lamella openings (115), wherein the number of lamella openings (115) and/or the geometry of the lamella openings (115) is calculated individually for each lamella (112).

12. A method for manufacturing a lamella block (100), which involves the following steps:
- generating a dataset, which images the lamella block (100) according to one of claims 1 to 6;
- storing the dataset on a storage device or a server; and
- inputting the dataset into a processing device or a computer, which actuates an additive manufacturing device in such a way that the latter fabricates the lamella block (100) imaged in the dataset.

13. A computer program, comprising datasets, which while the datasets are being read in by a processing device or a computer, prompts the latter to actuate an additive manufacturing device in such a way that the additive manufacturing device fabricates a lamella block (100) with the features according to one of claims 1 to 6.

14. A computer-readable data carrier, which stores the computer program according to claim 13.

## Revendications

1. Bloc de lamelles (100) pour un dispositif d'étalonnage (500) pour étalonner un profilé (550) extrudé, dans lequel le bloc de lamelles (100) comprend une structure de lamelles (110), laquelle présente une pluralité de lamelles (112) qui sont éloignées l'une de l'autre par des rainures (114) et sont disposées dans le sens longitudinal du bloc de lamelles (100), **caractérisé en ce qu'**au moins quelques-unes des lamelles (112) sont dotées d'au moins un passage de lamelles (115) à géométrie variable prédéfinie, dans lequel la géométrie des passages de lamelles (115) au sein d'une lamelle (112) est différente.

2. Bloc de lamelles (110) selon la revendication 1, **caractérisé en ce que** la géométrie des passages de lamelles (115) de lamelles (112) qui se succèdent varie.

3. Bloc de lamelles (100) selon l'une des revendications précédentes, **caractérisé en ce que** les passages de lamelles (115) de lamelles (112) qui se succèdent sont disposés décalés entre eux.

4. Bloc de lamelles (110) selon l'une des revendications précédentes, **caractérisé en ce que** le bloc de lamelles (100) présente en outre une structure porteuse (120) sur laquelle les lamelles (112) de la structure de lamelles (110) sont disposées.

5. Bloc de lamelles (100) selon l'une des revendications précédentes, **caractérisé en ce que** le bloc de lamelles (100) est fabriqué d'un seul bloc.

6. Bloc de lamelles selon l'une des revendications précédentes, **caractérisé en ce que** le bloc de lamelles (100) est fabriqué par procédé d'impression 3D, respectivement par un procédé de fabrication additive.

7. Dispositif d'étalonnage (500) pour étalonner des profilés extrudés (510), comprenant une pluralité de blocs de lamelles (100) selon l'une des revendications 1 à 6, dans lequel les blocs de lamelles (100) sont disposés les uns par rapport aux autres pour former une ouverture d'étalonnage (510).

8. Dispositif d'étalonnage selon la revendication 7, dans lequel le dispositif d'étalonnage (500) comprend une pluralité de dispositifs d'actionnement (520), dans lequel chaque dispositif d'actionnement (520) est couplé respectivement à un bloc de lamelles (100) pour actionner un bloc de lamelles (100) respectif individuellement.

9. Procédé de fabrication d'un bloc de lamelles (100) selon l'une des revendications 1 à 6, comprenant l'étape de fabrication du bloc de lamelles (100) par impression 3D, respectivement, par fabrication additive.

10. Procédé selon la revendication 9, comprenant en outre le calcul d'une géométrie 3D de bloc de lamelles et la conversion des données de géométrie 3D de bloc de lamelles calculées en commandes correspondantes pour l'impression 3D, respectivement, la fabrication additive.

11. Procédé selon la revendication 10, dans lequel l'étape de calcul de la géométrie 3D de bloc de lamelles comprend : le calcul de passages de lamelles (115), dans lequel le nombre des passages de lamelles (115) et/ou la géométrie des passages de lamelles (115) est/sont calculé(e)(s) individuellement pour chaque lamelle (112).

12. Procédé de fabrication d'un bloc de lamelles (100) qui comprend les étapes :
- de création d'un jeu de données qui représente le bloc de lamelles (100) selon l'une des revendications 1 à 6 ;
- d'enregistrement du jeu de données sur un dispositif de mémoire ou un serveur ; et
- de saisie du jeu de données dans un dispositif de traitement ou un ordinateur qui commande un dispositif de fabrication additive de façon à ce que celui-ci fabrique le bloc de lamelles (100) représenté dans le jeu de données.

13. Programme informatique comprenant des jeux de données qui, lorsque les jeux de données sont mis en mémoire par un dispositif de traitement ou un ordinateur, fait que celui-ci commande un dispositif de fabrication additive de façon à ce que le dispositif de fabrication additive fabrique un bloc de lamelles (100) ayant les caractéristiques selon l'une des revendications 1 à 6.

14. Support de données pouvant être lu sur ordinateur, sur lequel est enregistré le programme informatique selon la revendication 13.
